Europäisches Patentamt
European Patent Office
Office européen des brevets

(19)

(11) Veröffentlichungsnummer : **0 184 977 B1**


(12)

# EUROPÄISCHE PATENTSCHRIFT


(45) Veröffentlichungstag der Patentschrift : **19.10.88**

(51) Int. Cl.⁴ : **B 01 D 46/30**, B 01 D 53/08

(21) Anmeldenummer : **85710008.5**

(22) Anmeldetag : **19.11.85**


(54) **Schüttschichtfilter, insbesondere für Rauchgase.**


(30) Priorität : **30.11.84 DE 3443832**

(43) Veröffentlichungstag der Anmeldung : **18.06.86 Patentblatt 86/25**

(45) Bekanntmachung des Hinweises auf die Patenterteilung : **19.10.88 Patentblatt 88/42**

(84) Benannte Vertragsstaaten : **CH FR GB LI SE**

(56) Entgegenhaltungen :
**EP-A- 0 095 999**
**DE-C- 342 402**
**FR-A- 492 200**
**GB-A- 2 116 870**



(73) Patentinhaber : **FHW-Brenntechnik GmbH Landshuter Strasse 5 D-8267 Neumarkt-Sankt Veit (DE)**

(72) Erfinder : **Weichs, Hermann Johann-Strauss-Strasse 21 D-8267 Neumarkt-Sankt Veit (DE)**

(74) Vertreter : **Eder, Eugen, Dipl.-Ing. et al Patentanwälte Dipl.-Ing. E. Eder Dipl.-Ing. K. Schieschke Elisabethstrasse 34 D-8000 München 40 (DE)**


**EP 0 184 977 B1**


Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue St-Denis, 75001 Paris, France

**Beschreibung**

Die Erfindung betrifft ein Schüttschichtfilter, insbesondere für Rauchgase mit den Merkmalen des Oberbegriffs des Patentanspruchs 1.

Ein derartiges Schüttschichtfilter ist aus der GB-A-2 116 870 bekannt. Diese beschreibt ein turmartiges Wanderbettfilter mit übereinander angeordneten Tragrosten, die zueinander bewegliche Rostteile mit Öffnungen besitzen. Der obere Tragrost schließt den Füllschacht ab, der das Filtermaterial in geöffneter Stellung dieses Rostes nachliefert. Der untere Tragrost trägt die erneuerbare Schüttschicht. In geöffneter Stellung läßt der Tragrost die verunreinigte untere Schicht der Schüttschicht nach abwärts in einen Auffangbehälter mit Austragvorrichtung fallen. Unterhalb des Tragrostes befindet sich ein Rohgasraum. Überhalb dieses Tragrostes ein Reingasraum. Nachteilig ist bei diesen bekannten Filtern, daß keine Gewähr dafür gegeben ist, daß die Schüttschicht eine völlig gleichmäßige Stärke ohne Nesterbildung besitzt. Das Zubringen von neuem Filtermaterial erfolgt durch Abrieseln von darüber befindlichem neuen Filtermaterial. Hierdurch ist auch bedingt, daß der Füllschacht die gleiche Grundfläche wie die Schüttschicht besitzen muß. Für großflächige langgestreckte Filter ist dies unerwünscht.

Die EP-A-0095999 beschreibt wiederum ein ähnliches Schüttschichtfilter, bei dem zur Rückführung des gereinigten Filtermaterials ein Förderer mit Ketten und Becherwerk verwendet wird. Ein solcher Förderer dient aber nicht zur Verteilung des Filtermaterials an der Oberseite der Schüttschicht. Bei dieser Vorrichtung wirkt mit der Oberseite der Schüttschicht ein Glattstreicher zusammen. Eine genaue Stärke der Filterschicht kann hierdurch nicht erreicht und eine Nesterbildung nicht vermieden werden.

Die FR-A-492 200 beschreibt ein Drehfilter, bei dem auf eine rotierende Filterscheibe eine Filterschicht aufgebracht wird. Hierzu dient ein radialer Füllschacht mit einer in seiner Höhe steuerbaren radialen Auslauföffnung. Bei drehender Filterscheibe wird die ankommende Filterschicht durch eine radiale Austragsvorrichtung mit Hilfe einer Schnecke ausgetragen. Ein solches Filter ist insbesondere bei großflächiger Filterfläche aufwendig. Eine überall gleichmäßige Filterstärke wird nicht gewährleistet. Auch eine Nesterbildung kann nicht ausgeschlossen werden.

Der Erfindung liegt die Aufgabe zugrunde, ein Schüttschichtfilter zu schaffen, das es ermöglicht, daß die Schüttschicht möglichst gleichmäßig in erwünschter Stärke ohne Hohlräume und Nesterbildung aufgetragen wird und daß auch eine großflächige, langgestreckte Filterform ermöglicht wird, ohne daß der Füllschacht gleiche Flächenausdehnung besitzen muß. Zudem soll ein einfacher und daher preiswerter Filteraufbau gewährleistet werden.

Die Erfindung löst diese Aufgabe mit den kennzeichnenden Merkmalen des Patentanspruches 1.

Die Erfindung ermöglicht bei einem liegenden, kompakten Aufbau eines Filters eine möglichst gleichmäßige, unter keinem wesentlichen Preßdruck stehende Schüttschicht an Filtermaterial. Hohlräume und Nester in der Schüttschicht werden selbst bei durch Kondenswasserbildung feuchtem Filtermaterial sicher vermieden. Die Zubringung von neuem Filtermaterial an der Schüttschichtoberseite erfolgt mittels einer Verteilvorrichtung, die eine gleichmäßige Verteilung des Filtermaterials über die gesamte Fläche in gleichbleibender Stärke durch die Verwendung eines Kettenförderers mit Kratzleisten sichert. Die hierdurch verhältnismäßig locker aufgebaute Schüttschicht bedingt nur einen geringen Druckabfall im Strom des zu filtrierenden Gases. Der flächige Abtrag der Schüttschicht an der Unterseite mittels eines Tragrostes mit hin- und herbewegbarem Schieberrost wird durch einen gleichmäßigen Auftrag an neuem Material an der Oberseite ersetzt. Bei Verwendung von Flüssigkeitsdüsen kann auch eine feuchte Schüttschicht für bestimmte Filterzwecke verwendet werden. Es ist auch möglich, die Schüttschichtstärke leicht zu verändern und damit die Filterwirkung unterschiedlichen Betriebsbedingungen anzupassen. Fällt ein stärkerer Schadstoffanteil an, kann die Schichtstärke ohne große Schwierigkeiten erhöht werden. Der Verschmutzungsgrad der Schüttschicht kann auf einem angemessenen Wert dadurch gehalten werden, daß man in bestimmten Zeiträumen einen schichtweisen, ganzflächigen Austrag an der Unterseite und Ersatz mit reinem Filtermaterial an der Oberseite vorsieht. Für bestimmte Filterzwecke kann die Schüttschicht auch aus unterschiedlichen Filtermaterialien schichtweise gebildet werden. So kann z. B. die dem Tragrost zugekehrte Schicht aus Kalziumcarbonat $CaCO_3$-Granulat gebildet sein, wogegen die Oberschicht aus Aktivkohle gebildet ist. Somit können völlig unterschiedliche Schadstoffanteile ausgefiltert werden. Insbesondere bei einem Rauchgas, das aus einem Tunnelofen zum Brennen von Ziegeln abgezogen wird, können je nach Ziegelart, denen auch Zuschlagstoffe wie Polystyrol, Sägemehl, Braunkohle usw. zugesetzt werden, neben Staubanteilen auch Kohlenwasserstoffe, Formaldehyd etc. anfallen. Die Aktivkohle wird wieder aufbereitet, und die anfallenden Kohlenwasserstoffe werden der Brennzone des Ofens als Heizgas zugeführt, die dadurch schadlos verbrannt werden. Die Schüttschicht kann auch abhängig vom Luftwiderstand, und damit vom Verschmutzungsgrad, erneuert werden. Steigt der Luftwiderstandswert beim Durchtritt des Rauchgases durch die Schüttschicht über einen vorgegebenen Wert an, wird der Antrieb für den Tragrostschieber eingeschaltet, wodurch die verschmutzte untere Schicht des Filters ausgetragen wird. In Folgeschaltung können auch die übrigen, zum Filter gehörenden Zuführ- und Austragvorrichtungen geschaltet werden.

Weitere Ausgestaltungen der Erfindung ergeben sich aus den Unteransprüchen.

Die Erfindung wird nachfolgend anhand eines in der Zeichnung dargestellten Ausführungsbeispiels näher erläutert. In der Zeichnung zeigen :

Fig. 1 ein Fließschema eines Tunnelofens mit Schüttschichtfilter zum Brennen von Grobkeramik, z. B. Ziegelsteinen ;

Fig. 2 einen vertikalen Längsschnitt des Schüttschichtfilters ;

Fig. 3 einen vertikalen Querschnitt, und

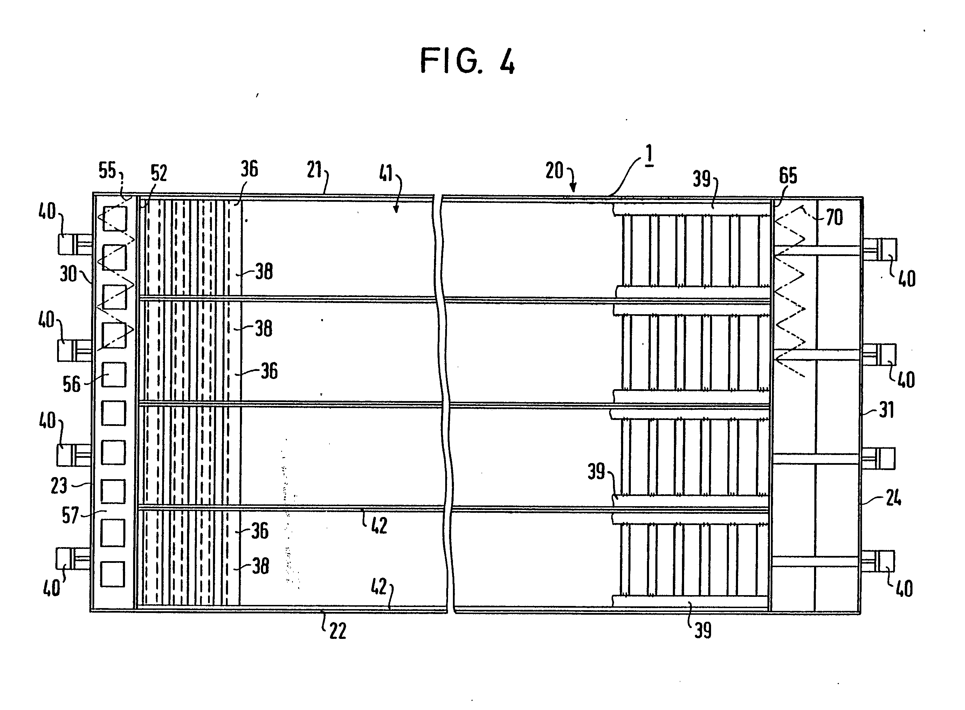

Fig. 4 eine Draufsicht des Schüttschichtfilters.

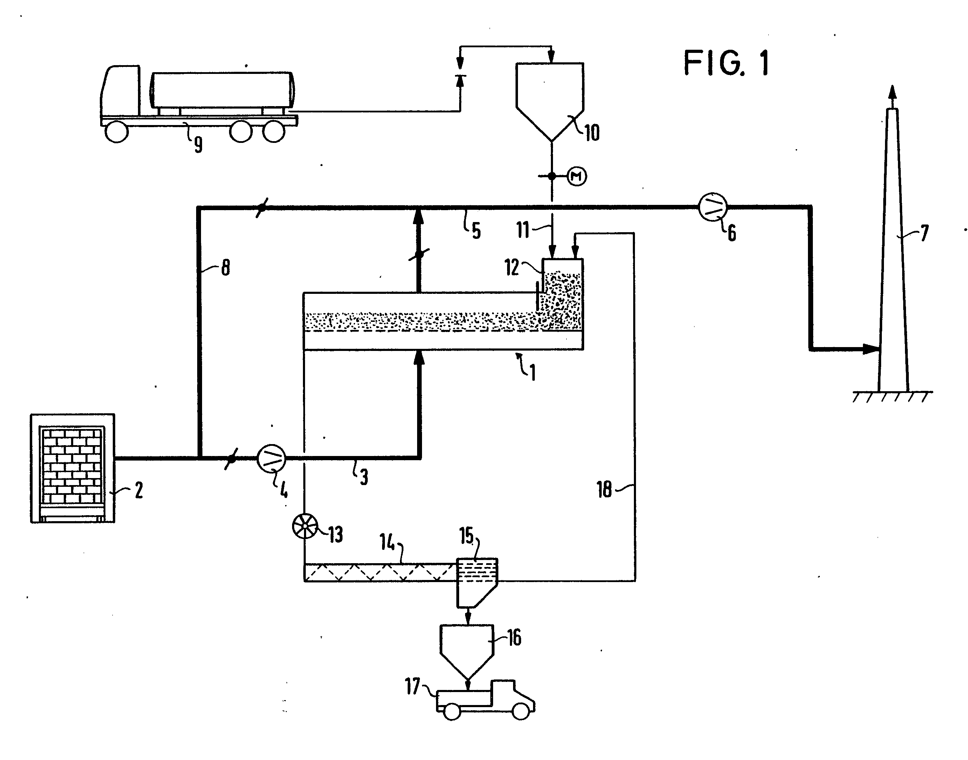

Die Erläuterung des Schüttschichtfilters 1 erfolgt nach Fig. 1 nur beispielsweise anhand eines Fließschemas für einen Tunnelofen 2 zum Brennen von Grobkeramik, z. B. Ziegeln. Das vom Tunnelofen 2 abgezogene Rohgas wird über die Rohrleitung 3, in die ein Absperrventil 4 eingeschaltet ist, dem Schüttschichtfilter 1 zugeleitet. Das vom Schüttschichtfilter 1 kommende Reingas wird über die Rohrleitung 5 über ein Absperrventil 6 zum Kamin 7 geführt.

Für Reparaturzwecke des Schüttschichtfilters 1 erfolgt nach Absperren durch das Absperrventil 4 eine Umleitung des Rohgases über eine absperrbare By-pass-Leitung 8 direkt zur Leitung 5 und zum Kamin 7.

Das Schüttschichtmaterial, z. B. ein Kalziumcarbonat-Granulat $CaCO_3$ wird über einen Silo-Lkw 9 in ein Vorratssilo 10 eingebracht. Von diesem gelangt das Filtermaterial über eine Rohrleitung 11 zum Aufgabeteil 12 des Schüttschichtfilters 1.

Das aus dem Schüttschichtfilter 1 ausgetragene, verunreinigte Filtermaterial wird über eine Zellenradschleuse 13, einem Rotationssichter 14 mit Trenner 15, einerseits einem Silo 16 für den nicht wieder aufbereitbaren Teil, schließlich einem Lkw 17, und andererseits über eine Rohrleitung 18 für den aufbereiteten Filtermaterialteil dem Schüttschichtfilter 1 zurückgeführt.

Das Schüttschichtfilter 1 besitzt ein in Draufsicht langgestrecktes, rechteckförmiges Gehäuse 20. Die parallelen Längsseitenwände 21, 22 sind an ihren Enden durch Stirnwände 23, 24 verbunden. Oben ist das Gehäuse durch die Dekkenwand 25 abgeschlossen. An der Gehäuseunterseite befinden sich in Längsrichtung zur Mitte hin zulaufende Seitenwände 26, 27, mit deren Enden ein horizontales Bodenteil 28 verbunden ist. Das Unterteil 29 besitzt wieder parallele, vertikale, trapezförmige Stirnwände 30, 31, die mit den Seitenwänden 26, 27 verbunden sind.

Das Gehäuse 20 ist über vier Bodenstützen 32, die an den Gehäuseecken angeordnet sind, am Boden abgestützt.

Das Unterteil 29 wird von dem Gehäuseoberteil 33 durch einen durchgehenden Tragrost 34 getrennt. Der Tragrost 34 besteht aus zwei parallelen, an den Seiten und Stirnwänden 21, 22, 23 und 24 befestigten Rostteilen 35, 36. Die Rostteile 35, 36 sind dabei so ausgebildet, daß die Rostschlitze 37 bzw. Roststege 38 der beiden Rostteile 35, 36 zueinander versetzt sind. Die Schlitze 37 des oberen Rostteiles 36 werden durch die Stege 38 des unteren Rostteiles 35 abgedeckt.

Zwischen den Rostteilen 35, 36 befindet sich ein ebenfalls Roststege aufweisender Rostschieber 39, der auf dem unteren Rostteil 35 aufliegend durch Antriebe, z. B. hydraulische oder pneumatische Einfach-Zylinder 40 hin- und herbewegt wird.

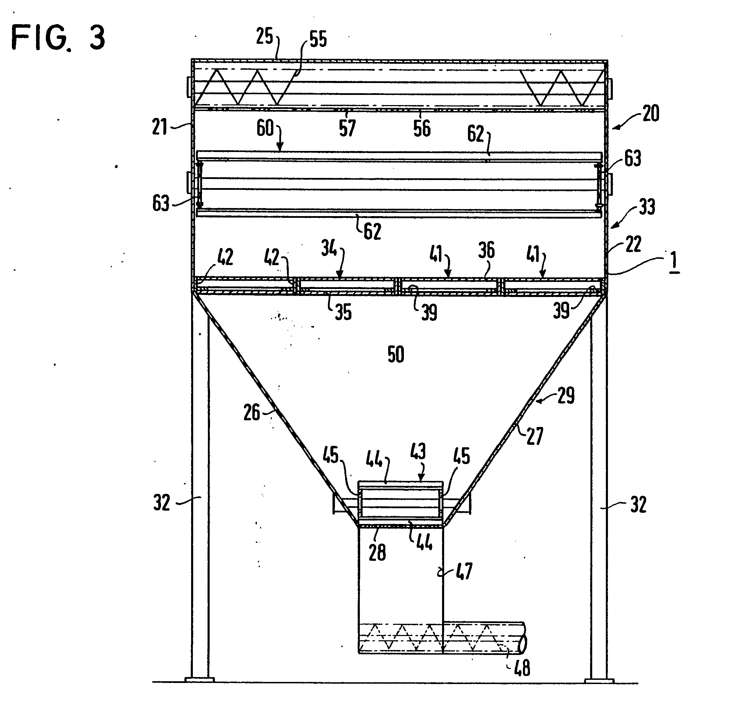

Wie aus Fig. 3 ersichtlich, ist der Tragrost 34 aus in Längsrichtung nebeneinanderliegenden Kassettenteilen 41 aufgebaut, die für sich abgeschlossen mit seitlichen Wänden 42 versehen sind. Jede Kassette 41 besitzt einen Rostschieber 39. Die hin- und herbewegbaren Rostschieber 39 sind an den Stirnwänden durch einfach wirkende, vorzugsweise pneumatische Antriebszylinder 40 einzeln angetrieben. Hierdurch können die dem Verschleiß unterliegenden Kassetten 41 des Tragrostes 34 einfacher ersetzt werden.

Die bei Betätigung des Rostschiebers 39 des Tragrostes 34 nach abwärts ausgetragenen Filtermaterialien werden am Boden 28 des Unterteils 29 gesammelt. Dort ist ein Endloskettenförderer 43 mit querverlaufenden Mitnehmerleisten 44 angeordnet. Der Kettenförderer 43 besitzt Umlenkkettenräder 45, von denen das eine durch einen nicht dargestellten Antriebsmotor angetrieben ist. Der in der angegebenen Pfeilrichtung sich bewegende Förderer 43 räumt mit seinem Untertrum 46 den Boden 28 frei und trägt das Filtermaterial in einem nach abwärts gerichteten Schacht 47 aus, an dessen Boden sich eine Austragschnecke 48 befindet. Der Schachtfühler 49 schaltet von Zeit zu Zeit den nicht dargestellten Antrieb der Austragschnecke 48 über eine vorbestimmbare Zeit ein.

Dem Raum unterhalb des Tragrostes 34 kann über einen nicht dargestellten Anschlußstutzen das zu filternde Rohgas zugeleitet werden. Vorzugsweise wird es mit einem Überdruck, z. B. mit 40 mm WS (392 $N/m^2$) und z. B. 140 °C zugeleitet.

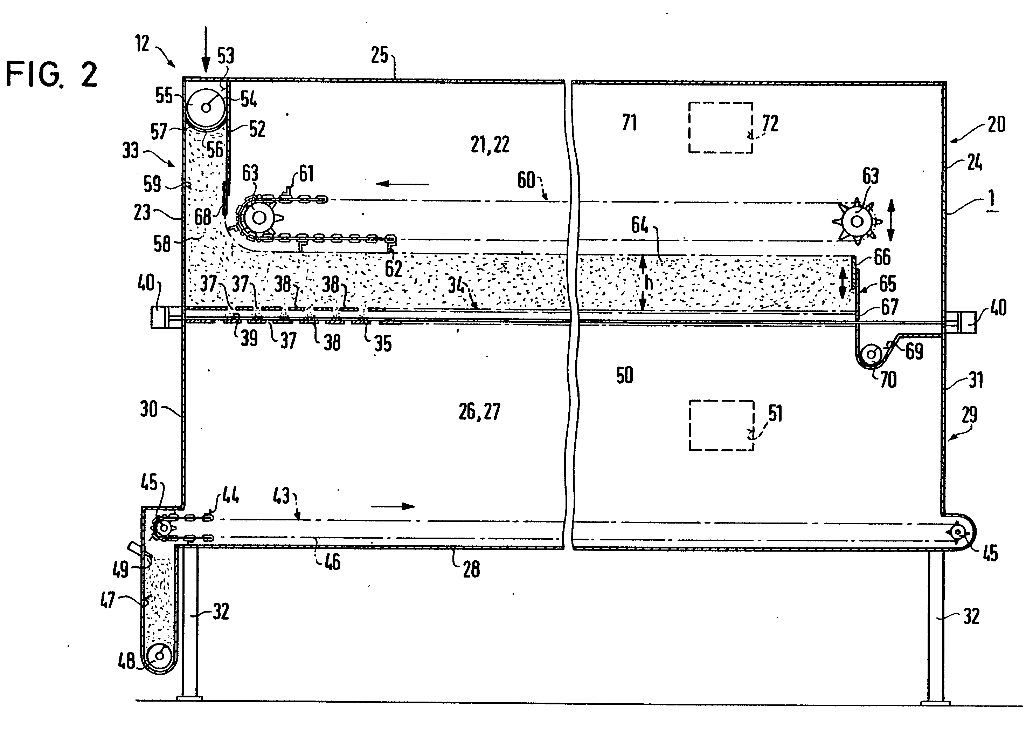

Außerdem ist der Rohgasraum 50 mit einer in Fig. 2 strichliert angedeuteten Inspektionsöffnung 51 versehen.

Dem Gehäuseoberteil 33 wird über eine nicht dargestellte Leitung in der angegebenen Pfeilrichtung Filtermaterial, z. B. granuliertes Kalziumcarbonat $CaCO_3$ zugeleitet. In dem durch die Querwand 52 gebildeten Füllschacht 53 befindet sich am oberen Ende eine Aufgabevorrichtung 54. Diese besitzt eine angetriebene Schnecke 55, die das zugeführte Filtermaterial gleichmäßig den Öffnungen 56 im darunter befindlichten, gewölbten Abschlußblech 57 zuleitet.

Das über die Öffnungen 56 zugeführte Filtermaterial 58 fällt über den Schacht 59 nach abwärts und bildet einen von der Stirnwand 23 weg gerichteten Schüttkegel.

Parallel zum Tragrost 34 ist ein Endloskettenförderer 60 vorgesehen, dessen Endloskette 61 mit Mitnahmeleisten 62 über Umlenkräder 63 geführt ist, von denen ein Paar angetrieben ist. Der in der angegebenen Pfeilrichtung laufende Kettenförderer 60 nimmt mit seinem Untertrum Material vom Schüttkegel des Filtermaterials mit und verteilt es nach und nach über die gesamte Länge des Tragrostes 34 mit einer vorbestimmten Stärke h. Das Ende der gleichmäßig verteilten Schüttschicht 64 ist durch eine geteilte Abschlußwand 65 begrenzt. Der obere Wandteil 66 ist gegenüber der ortsfesten unteren Wand 67 in der Höhe einstellbar und feststellbar.

Zugleich ist der Endloskettenförderer 60 in der Höhe entsprechend der angegebenen Pfeilrichtung einstellbar.

Auch das untere Teil 68 der Querwand 52 ist zusammen mit dem Kettenförderer 60 und der Abschlußwand 65 höheneinstellbar. Hierdurch kann die Schüttschicht 64 auf eine gewünschte vorbestimmte Höhe eingestellt werden.

Hat der Kettenförderer 60 das Filtermaterial gleichmäßig über den Tragrost verteilt, wird das überschießende Material über die Abschlußwand 65 mitgenommen, von wo es in einen tiefer gezogenen Querkanal 69 fällt, in dem sich eine Austragschnekke 70 befindet. Auch in diesem Querkanal 69 befindet sich ein nicht dargestellter Fühler, der bei entsprechender ausgetragener Überschußmenge an Filtermaterial betätigt, den nicht dargestellten Antrieb für die Schnecke 70 einschaltet, welche das im Querkanal 69 befindliche Filtermaterial austrägt, von wo es wieder zu einem Vorratssilo, z. B. Silo 10, nach Fig. 1, zurückgefördert wird. Zugleich wird aber durch diesen Fühler der Antrieb des Kettenförderers 60 abgeschaltet.

Der Antrieb des Kettenförderers 60 wird wieder eingeschaltet, wenn der Tragrost 34 mittels seines Rostschiebers 39 für eine vorbestimmte Zeit verbrauchtes, verschmutztes Filtermaterial an der Unterseite der Schüttschicht 64 über eine vorbestimmte Zeit ausgetragen hat. Der Austrag dieser verbrauchten Filterschicht an der Unterseite der Schüttschicht 64 kann z. B. alle drei Stunden erfolgen.

Unmittelbar oberhalb der Schüttschicht 64 befindet sich der vom Oberteil 33 des Gehäuses 20 begrenzte freie Raum 71, in dem sich das gefilterte Reingas sammelt, welches über einen nicht dargestellten Abschlußstutzen am Oberteil 33 des Gehäuses 20 abgezogen wird. Vorzugsweise erzeugt ein in der Abzugsleitung befindlicher Lüfter einen Unterdruck von z. B. 40 mm/WS (392 N/m$^2$).

Während des Stillstandes des Rostschiebers 39 des Tragrostes 34 durchströmt das Rohgas aus dem Rohgasraum 50 die gleichmäßig verteilte, keine Hohlräume und keine Nester aufweisende Schüttschicht 64 und gelangt in den Reingasraum 71. Durch die Temperatur des Rohgases werden dabei die Filtergranulate erwärmt und getrocknet. Nach einer vorbestimmten Zeit, z. B. drei Stunden, wird eine bestimmte Schichtstärke an der Unterseite der Schüttschicht 64 mittels Hin- und Herbewegens des Rostschiebers 39 nach abwärts ausgetragen. Die weiter oben befindliche, noch gar nicht oder wenig verschmutzte Materialschicht gelangt dabei nach abwärts in Richtung zum Tragrost 34 hin.

Nach vorbestimmter Zeit, z. B. drei Stunden, oder aber bei Absenken auf eine vorbestimmte Höhe wird der Kettenförderer 60 eingeschaltet und verteilt neues reines Filtermaterial über die untere filternde Schüttschicht. Auf diese Weise wird an der Unterseite verbrauchtes Filtermaterial ständig abgetragen und an der Oberseite neues reines Filtermaterial zugeführt.

Die verschiedenen Bewegungen von Rostschieber 39, Kettenförderer 43 und Kettenförderer 60 sowie der Aufgabeschnekke 55 und der Austragsschnecken 48, 70 sind zeitlich aufeinander abgestimmt und erfolgen vollständig automatisch.

Im Bedarfsfall ist es auch möglich, oberhalb der Schüttschicht 64 Düsen zum Aufsprühen von Flüssigkeiten vorzusehen, so daß eine Naßfilterung erfolgt.

Es ist auch möglich, übereinander unterschiedliche Schichten für die Schüttschicht 64 mittels des Kettenförderers 60 aufzubringen. So könnte z. B. an der Oberseite eine Schicht aufgebracht werden, die andere Bestandteile des Rohgases ausfiltert als die weiter unten liegende Schicht. Für eine solche Schicht könnte z. B. Aktiv-Kohle verwendet werden.

Auch im Reingasraum 71 kann, wie strichliert angedeutet, eine Inspektionsöffnung 72 vorgesehen sein.

Die Stege 38 des unteren Rostes 35 und/oder des oberen Rostes 36 und/oder des Schiebers 39 können mit nicht dargestellten Gasdurchtrittsöffnungen versehen sein.

Es können auch mehrere Schüttschichtfilter 1 hintereinander in Strömungsrichtung des zu filternden Gases mit verschiedenen Filtermaterialien 58 angeordnet werden. Ein Durchmischen von verschiedenen Filterschichten wird dadurch sicher vermieden.

**Patentansprüche**

1. Schüttschichtfilter (1), insbesondere für Rauchgase, mit einem horizontalen, stationären Tragrost (34), einer darauf aufgebrachten und erneuerbaren Schüttschicht (64) vorbestimmter Stärke, an die sich auf der Unterseite ein Rohgasraum (50) und auf der Oberseite ein Reingasraum (71) anschließt, einer Austragsvorrichtung (39) für die Schüttschicht, die unterhalb des Tragrostes (34) angeordnet ist, die nur den Austrag der unteren verschmutzten Schüttschicht bewirkt und einer Zubringvorrichtung für die Schüttschicht, die einen Füllschacht (53) und eine Verteilvorrichtung (60) umfaßt, dadurch gekennzeichnet, daß der Füllschacht (53) an einer Seite des Tragrostes (34) angeordnet ist, daß die Verteilvorrichtung (60) eine endlose Kratzerkette (61) mit mit Kratzleisten (62) ist, deren unteres Trum parallel zur Oberseite der Schüttschicht (64) in Höhe der gewünschten Schüttschichtstärke verläuft und daß sich an den Tragrost (34) an der dem Füllschacht (53) gegenüberliegenden Seite eine Begrenzungswand (65) mit Überlaufaustragsvorrichtung (69, 70) befindet.

2. Schüttschichtfilter nach Anspruch 1, dadurch gekennzeichnet, daß der Tragrost (34) ein Doppelrost (35, 36) ist, in dem ein Schieberrost (39) hin- und herbewegbar ist.

3. Schüttschichtfilter nach Anspruch 2, dadurch gekennzeichnet, daß der Tragrost (34) mit Schieber (39) in mehrere auswechselbare Längskassetten (41) aufgeteilt ist.

4. Schüttschichtfilter nach Anspruch 3, dadurch gekennzeichnet, daß jedem Schieber (39) der Längskassette (41) ein Schiebeantrieb (40) für seine Hin- und Herbewegung zugeordnet ist.

5. Schüttschichtfilter, nach den Ansprüchen 1 bis 4, dadurch gekennzeichnet, daß die Stege (38) des unteren Rostteiles (35) und/oder des oberen Rostteils (36) und/oder des Schiebers (39) mit Löchern für den Durchtritt des zu filternden Gases versehen sind.

6. Schüttschichtfilter nach Anspruch 1, dadurch gekennzeichnet, daß die Stärke der Schüttschicht (64) durch eine in der Höhe (h) veränderbare Begrenzungswand (65) bestimmt ist.

7. Schüttschichtfilter nach Anspruch 1, dadurch gekennzeichnet, daß die Verteilvorrichtung (60) in der Höhe einstellbar ist.

8. Schüttschichtfilter nach Anspruch 1, dadurch gekennzeichnet, daß der Überlaufaustragvorrichtung (69, 70) ein Fühler für überlaufendes Filtermaterial (58) zugeordnet ist, der den Antrieb der Verteilvorrichtung (60) schaltet.

9. Schüttschichtfilter nach Anspruch 1, dadurch gekennzeichnet, daß sein Gehäuse (20) im Grundriß ein langgestreckt liegendes Rechteck ist.

10. Schüttschichtfilter nach Anspruch 1, dadurch gekennzeichnet, daß der Schüttschicht (64) Besprühungsdüsen für Flüssigkeiten zugeordnet sind.

11. Schüttschichtfilter nach Anspruch 1, dadurch gekennzeichnet, daß die Schüttschicht (64) aus unterschiedlichen Filtermaterialschichten gebildet ist.

12. Schüttschichtfilter nach den Ansprüchen 1 und 11, dadurch gekennzeichnet, daß mehrere Filter (1) hintereinander im Strömungsweg des zu filternden Gases mit verschiedenen Filtermaterialien angeordnet sind.

**Claims**

1. A loose-material layer filter (1), more especially for flue gases, with a horizontal stationary supporting grid (34), a thereon applied and renewable layer (64) of loose material of predetermined thickness, linking to which on the lower side is a raw gas chamber (50) and on the upper side is a clean gas chamber (71), a discharge device (39) for the layer of loose material which is arranged underneath the supporting grid (34), which brings about only the discharge of the lower contaminated layer of loose material and a feeder device for the layer of loose material which comprises a filling shaft (53) and a distributing device (60), characterised in that the filling shaft (53) is arranged at one side of the supporting grid (34), in that the distributing device (60) is an endless scraper chain (61) having scraping strips (62), the lower side of which extends parallel to the upper side of the layer (64) of loose material at the height of the desired thickness of the layer of loose material and in that situated on the supporting grid (34) at the side lying opposite to the filling shaft (53) is a boundary wall (65) with an overflow discharge device (69, 70).

2. A loose-material layer filter according to claim 1, characterised in that the supporting grid (34) is a double grid (35, 36) in which a grid (39) is movable to and fro.

3. A loose-material layer filter according to claim 2, characterised in that the supporting grid (34) with slider (39) is divided into several exchangeable longitudinal coffers (41).

4. A loose-material layer filter according to claim 3, characterised in that associated with each slider (39) of the longitudinal coffer (41) is a sliding drive (40) for its movement to and fro.

5. A loose-material layer filter, according to claims 1 to 4, characterised in that the crosspieces (38) of the lower grate part (35) and/or of the upper grate part (36) and/or of the slider (39) are provided with holes for the passage of the gas that is to be filtered.

6. A loose-material layer filter according to claim 1, characterised in that the thickness of the layer (64) of loose material is determined by a boundary wall (65) which is variable in height (h).

7. A loose-material layer filter according to claim 1, characterised in that the distributing device (60) is adjustable in height.

8. A loose-material layer filter according to claim 1, characterised in that associated with the overflow discharge device (69, 70) is a sensor for overflowing filter material (58) which operates the drive of the distributing device (60).

9. A loose-material layer filter according to claim 1, characterised in that its housing (20) in ground plan is an elongatedly horizontal rectangle.

10. A loose-material layer filter according to claim 1, characterised in that spraying nozzles for liquids are associated with the layer (64) of loose material.

11. A loose-material layer filter according to claim 1, characterised in that the layer (64) of loose material is formed from layers of different filter material.

12. A loose-material layer filter according to claims 1 and 11, characterised in that several filters (10) are arranged behind one another in the flow path of the gas that is to be filtered each having various filter materials.

**Revendications**

1. Filtre à lit tassé (1), en particulier pour gaz de fumée, comportant une grille porteuse horizontale stationnaire (34), un lit tassé renouvelable (64) disposé sur la grille et ayant une épaisseur prédéterminée, une chambre à gaz brut (50) reliée à la face inférieure du lit et une chambre à gaz purifié (71) reliée à la face supérieure de celui-ci, un dispositif d'évacuation (31) du lit tassé, disposé au-dessous de la grille porteuse (34) et effectuant l'évacuation uniquement du lit tassé inférieur encrassé, et un dispositif d'amenée du lit tassé comprenant un puits de charge (53) et un dispositif de distribution (60), caractérisé en ce que le puits de charge (53) est disposé d'un côté de la grille porteuse (34), que le dispositif de distribution (60) est une chaîne gratteuse sans fin (61) pourvue de barres formant racloirs (62) dont le trajet inférieur est parallèle à la face supérieure du lit tassé (64) à la hauteur de l'épaisseur désirée du lit tassé, et en ce qu'une paroi de délimitation (65) équipée d'un dispositif d'évacuation (69, 70) du trop plein est disposée sur la grille porteuse (34) du côté opposé au puits de charge (53).

2. Filtre à lit tassé suivant la revendication 1, caractérisé en ce que la grille porteuse (34) est une grille jumelée (35, 36) dans laquelle une grille tiroir (39) est déplaçable dans un mouvement de va-et-vient.

3. Filtre à lit tassé suivant la revendication 2, caractérisé en ce que la grille porteuse (34) est divisée à l'aide de coulisseaux (39) en plusieurs caissons longitudinaux détachables (41).

4. Filtre à lit tassé suivant la revendication 3, caractérisé en ce qu'un dispositif de déplacement coulissant (40) est associé à chaque caisson longitudinal (41) en vu du mouvement de va-et-vient de celui-ci.

5. Filtre à lit tassé suivant les revendications 1 à 4, caractérisé en ce que les traverses (38) de la partie inférieure (35) de la grille et/ou la partie supérieure (36) de la grille et/ou du coulisseau (39) sont pourvues de trous pour le passage du gaz à filtrer.

6. Filtre à lit tassé suivant la revendication 1, caractérisé en ce que l'épaisseur du lit tassé (64) est définie par une paroi de limitation (65) réglable en hauteur (h).

7. Filtre à lit tassé suivant la revendication 1, caractérisé en ce que le dispositif de distribution (60) est réglable en hauteur.

8. Filtre à lit tassé suivant la revendication 1, caractérisé en ce que le dispositif d'évacuation (69, 70) du trop plein est pourvu d'un détecteur de matière filtrante (58) débordante, le détecteur commutant l'entraînement du dispositif de distribution (60).

9. Filtre à lit tassé suivant la revendication 1, caractérisé en ce que son boîtier (20) est en projection horizontale un rectangle étendu couché.

10. Filtre à lit tassé suivant la revendication 1, caractérisé en ce que des tuyères d'aspersion de liquide sont associées au lit tassé (64).

11. Filtre à lit tassé suivant la revendication 1, caractérisé en ce que le lit tassé (64) est formé de couches de matières filtrantes différentes.

12. Filtre à lit tassé suivant les revendications 1 et 11, caractérisé en ce que plusieurs filtres (1) sont agencés les uns après les autres dans le trajet de circulation du gaz à filtrer et comportent des matières filtrantes différentes.

FIG. 1
1
2
3
4
5
6
7
8
9
10
11
12
13
14
15
16
17
18
M

20
24
1
40
31
29
45
32
69
70
63
66
65
67
72
51
64
h
71
50
60
21,22
26,27
34
28
25
62
35
38
46
61
43
52
39
37
54
53
44
56
68
12
55
57
33
59
23
58
30
47
48
49

FIG. 2

20
63
33
22
1
32
39
29
27
41
36
62
45
47
48
43
44
50
56
57
28
35
34
55
25
60
42
26
21

FIG. 3

40
40
31
24
40
70
65
39
39
1
39
20
41
42
42
21
22
36
38
38
36
36
38
52
55
30
56
23
57
40
40
40
40


FIG. 4